(19) Europäisches Patentamt
European Patent Office
Office européen des brevets

(11) EP 4 704 189 A1

(12) **EUROPEAN PATENT APPLICATION**
published in accordance with Art. 153(4) EPC

(43) Date of publication:
**04.03.2026 Bulletin 2026/10**

(21) Application number: **24796789.6**

(22) Date of filing: **10.04.2024**

(51) International Patent Classification (IPC):
***H01M 4/525*** *(2010.01)* ***H01M 4/36*** *(2006.01)*
***H01M 4/505*** *(2010.01)*

(52) Cooperative Patent Classification (CPC):
Y02E 60/10

(86) International application number:
**PCT/JP2024/014463**

(87) International publication number:
**WO 2024/225033 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074277**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **SAITO, Motoharu**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, NONAQUEOUS ELECTROLYTE SECONDARY BATTERY, AND METHOD FOR PRODUCING POSITIVE ELECTRODE ACTIVE MATERIAL FOR NONAQUEOUS ELECTROLYTE SECONDARY BATTERIES**

(57) The present invention provides a positive electrode active material which has high durability and enables a battery to have a reduced DC resistance. A positive electrode active material for nonaqueous electrolyte secondary batteries according to one embodiment of the present disclosure is characterized by containing a lithium-containing composite oxide and a sulfonic acid compound that is present on the surface of the lithium-containing composite oxide. This positive electrode active material is also characterized in that: the lithium-containing composite oxide is composed of isolated particles having an average particle diameter of 0.5 μm to 5 μm inclusive, and contains 70 mol% or more of Ni and Mn in total with respect to the total molar quantity of metal elements excluding Li; and the sulfonic acid compound is represented by general formula I.

EP 4 704 189 A1

[Formula 1]

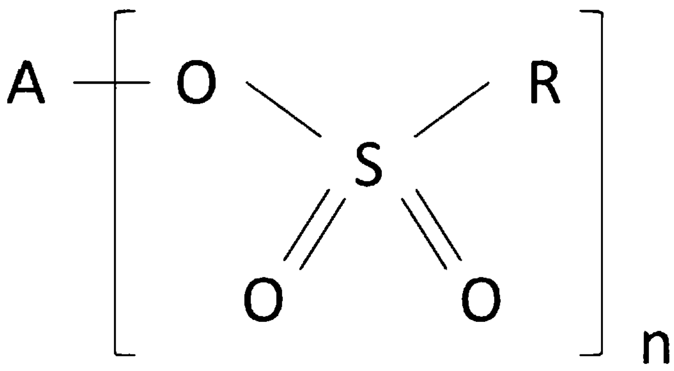

(I)

In the formula, A represents a group 1 element or a group 2 element; R represents a hydrocarbon group; and n is 1 or 2.



(Cont. next page)

Figure 1

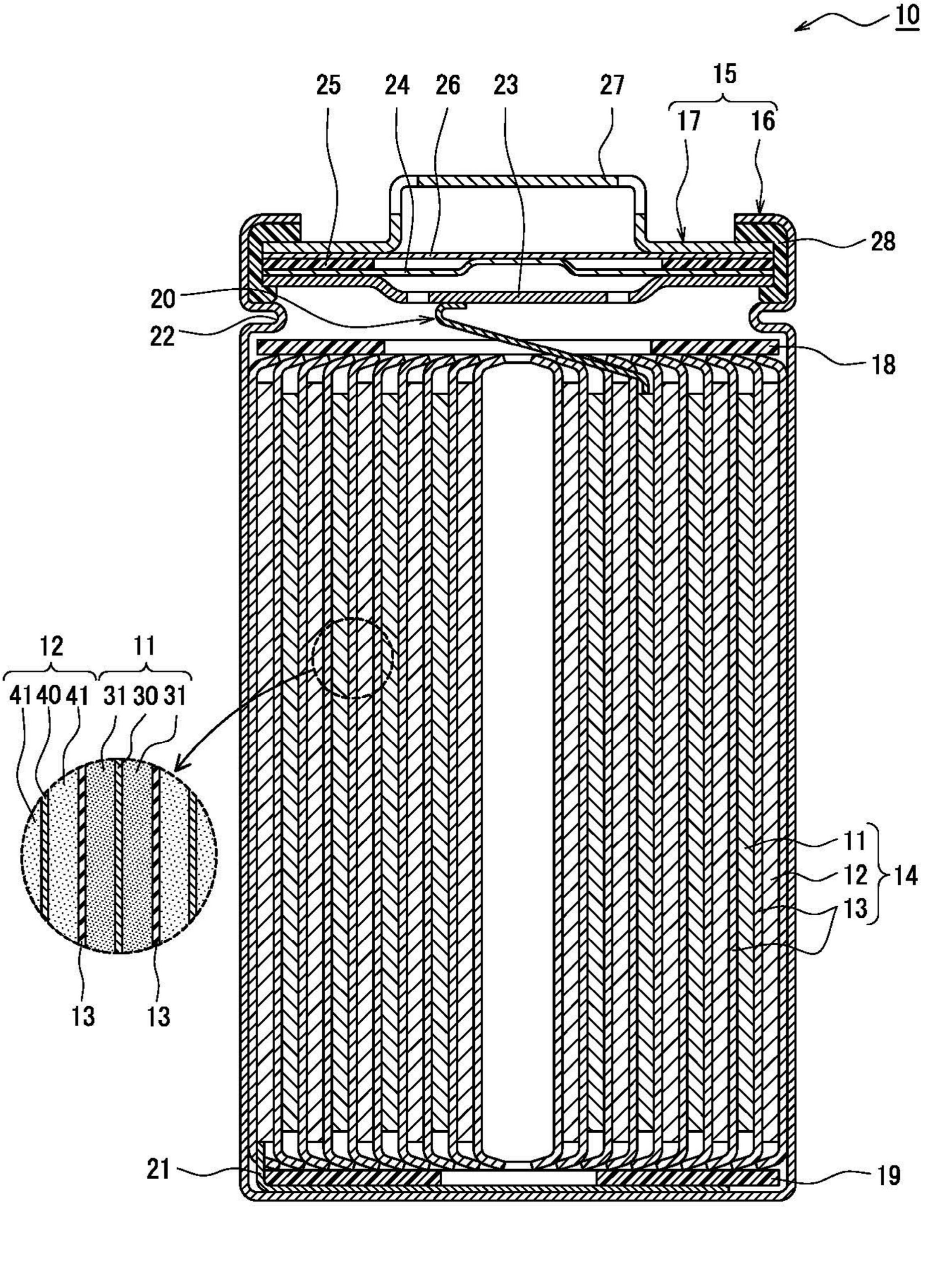
10
25
24
26
23
27
15
17
16
28
20
22
18
12
11
41 40 41
31 30 31
13
13
11
12
13
14
21
19

## Description

TECHNICAL FIELD

The present disclosure relates to a positive electrode active material for a non-aqueous electrolyte secondary battery, a non-aqueous electrolyte secondary battery, and a method for producing a positive electrode active material for a non-aqueous electrolyte secondary battery.

BACKGROUND ART

Lithium-containing composite oxides are used as positive electrode active materials for lithium-ion secondary batteries, which are non-aqueous electrolyte secondary batteries. In recent years, studies have been made to form lithium-containing composite oxides into single particles for the purpose of improving durability. For example, Patent Literature 1 discloses single particles of an NCM-based lithium-containing composite oxide (Ni content: $0.3 \leq Ni \leq 0.6$) having an average particle diameter of greater than or equal to 2 μm and less than or equal to 20 μm and a BET specific surface area of greater than or equal to 0.15 $m^2/g$ and less than or equal to 1.9 $m^2/g$, to which boron has been added. Patent Literature 2 also discloses single particles of an NCM-based lithium-containing composite oxide (Ni content: $0.3 \leq Ni \leq 0.6$) having an average particle diameter of greater than or equal to 3 μm and less than or equal to 8 μm and a crystallite size of greater than or equal to 1100 Å and less than or equal to 2000 Å.

CITATION LIST

PATENT LITERATURE

PATENT LITERATURE 1: Japanese Patent Application No. 2018-532236
PATENT LITERATURE 2: Japanese Patent Application No. 6850949

SUMMARY

As a result of intensive studies, the present inventors have found that even lithium-containing composite oxides in the form of single particles may have poor durability in some cases. Through further studies, the present inventors have also found that single particles may not be able to achieve both suppression of direct current resistance and durability in some cases. Patent Literatures 1 and 2 do not consider compatibility between suppression of direct current resistance and durability, and therefore there is still room for improvement.

An object of the present disclosure is to provide a positive electrode active material having high durability and reduced direct current resistance of the battery.

A positive electrode active material for a non-aqueous electrolyte secondary battery in one aspect of the present disclosure includes a lithium-containing composite oxide and a sulfonate compound present on a surface of the lithium-containing composite oxide, wherein the lithium-containing composite oxide is composed of single particles having an average particle diameter of greater than or equal to 0.5 μm and less than or equal to 5 μm, and contains greater than or equal to 70 mol% in total of Ni and Mn relative to a total molar amount of metal elements excluding Li, and the sulfonate compound is represented by the general formula I:

[Formula 1]

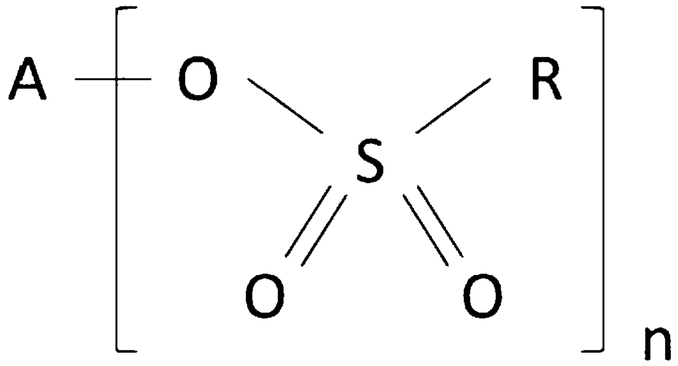

(I)

wherein A represents a group I element or a group II element, R represents a hydrocarbon group, and n represents 1 or 2.

A method for producing a positive electrode active material for a non-aqueous electrolyte secondary battery in one aspect of the present disclosure includes: a synthesis step of mixing a metal hydroxide containing greater than or equal to 70 mol% in total of Ni and Mn with a Li compound, followed by firing, to obtain a lithium-containing composite oxide composed of single particles; a washing step of washing the lithium-containing composite oxide, followed by dehydration, to obtain a cake-like composition; a drying step of drying the cake-like composition to obtain a powder-like composition; and an addition step of adding at least one of the group consisting of a sulfonate compound and a sulfonic acid solution to the cake-like composition or the powder-like composition.

The non-aqueous electrolyte secondary battery in one aspect of the present disclosure comprises a positive electrode including the positive electrode active material for a non-aqueous electrolyte secondary battery, a negative electrode, and a non-aqueous electrolyte.

According to the positive electrode active material for a non-aqueous electrolyte secondary battery in one aspect of the present disclosure, a non-aqueous electrolyte secondary battery having high durability and suppressed direct current resistance.

BRIEF DESCRIPTION OF DRAWING

FIG. 1 is a longitudinal sectional view of a non-aqueous electrolyte secondary battery as an example of an embodiment.

DESCRIPTION OF EMBODIMENTS

In recent years, the widespread use of non-aqueous electrolyte secondary batteries in automotive and energy storage applications has created a demand for high-capacity, and durable non-aqueous electrolyte secondary batteries. Furthermore, there is a demand for lower costs for non-aqueous electrolyte secondary batteries, and positive electrode active materials preferably containing relatively inexpensive Ni and Mn as main components are preferred. For the purpose of improving durability, the use of lithium-containing composite oxides in the form of single particles as positive electrode active materials has been studied, but many aspects of the properties of single particles remain unclear.

As a result of intensive studies to solve the above-described problems, the present inventors have found that single particles of a lithium-containing composite oxide containing Ni and Mn as the main components, which have a predetermined average particle diameter and crystallite size, can achieve both high durability and low direct current resistance when the surfaces of the single particles are coated with a predetermined sulfonate compound.

Hereinafter, one aspect of an embodiment of the non-aqueous electrolyte secondary battery according to the present disclosure will be described in detail. Hereinafter, a cylindrical battery including a wound electrode assembly accommodated in a cylindrical outer case will be illustrated, but the electrode assembly is not limited to the wound-type, and may be a laminate type in which a plurality of positive electrodes and a plurality of negative electrodes are alternately stacked one by one via separators. The outer case is not limited to the cylindrical shape, and may be, for example, a square shape, a coin shape, or the like, or may be a battery case constituted by a laminated sheet including a metal layer and a resin layer. In addition, the design of the non-aqueous electrolyte secondary battery according to the present disclosure is not limited to the design of the illustrated non-aqueous electrolyte secondary battery, and a known non-aqueous electrolyte secondary battery design may be applied.

FIG. 1 is a longitudinal sectional view of a non-aqueous electrolyte secondary battery 10 as an example of an

embodiment. As illustrated in FIG. 1, the non-aqueous electrolyte secondary battery 10 comprises an electrode assembly 14, a non-aqueous electrolyte (not shown), and a battery case 15 that houses the electrode assembly 14 and the non-aqueous electrolyte. The electrode assembly 14 has a wound structure in which a positive electrode 11 and a negative electrode 12 are wound with a separator 13. The battery case 15 is composed of a bottomed cylindrical exterior can 16 and a sealing assembly 17 blocking an opening portion of the exterior can 16.

The electrode assembly 14 is composed of a strip-shaped positive electrode 11, a strip-shaped negative electrode 12, two strip-shaped separators 13, a positive electrode tab 20 bonded to the positive electrode 11, and a negative electrode tab 21 bonded to the negative electrode 12. The negative electrode 12 is disposed to sandwich the positive electrode 11, for example.

The non-aqueous electrolyte secondary battery 10 comprises insulating plates 18 and 19 respectively disposed at the upper and lower sides of the electrode assembly 14. In the example illustrated in FIG. 1, the positive electrode tab 20 attached to the positive electrode 11 extends through a through-hole in the insulating plate 18 to the side of the sealing assembly 17, and the negative electrode tab 21 attached to the negative electrode 12 extends outside the insulating plate 19 to the side of the bottom of the exterior can 16. The positive electrode tab 20 is connected to the lower surface of a bottom plate 23 of the sealing assembly 17, by means of welding or the like, and a cap 27 of the sealing assembly 17 electrically connected to the bottom plate 23 serves as a positive electrode terminal. The negative electrode tab 21 is connected to the inner surface of the bottom of the exterior can 16 by means of welding or the like, and the exterior can 16 serves as a negative electrode terminal.

The exterior can 16 is, for example, a bottomed cylindrical metal container. A gasket 28 is provided between the exterior can 16 and the sealing assembly 17 to seal the inner space of the battery case 15. The exterior can 16 has a grooved portion 22 to support the sealing assembly 17, the grooved portion being formed by externally pressing the portion of the side surface portion, for example. The grooved portion 22 is preferably annularly formed along the peripheral direction of the exterior can 16, supporting the sealing assembly 17 by the upper surface thereof.

The sealing assembly 17 has a structure in which the bottom plate 23, a lower vent member 24, an insulating member 25, an upper vent member 26, and the cap 27 are layered, in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode active material included in the positive electrode mixture layer 31 constituting the positive electrode 11 will be described in detail.

[Positive Electrode]

The positive electrode 11 has, for example, a positive electrode current collector 30 and a positive electrode mixture layer 31 formed on the surface of the positive electrode current collector 30. The positive electrode mixture layer 31 is preferably formed on both the surfaces of the positive electrode current collector 30. As the positive electrode current collector 30, a foil of a metal that is stable in the potential range of the positive electrode 11, such as aluminum or an aluminum alloy, and a film with the metal disposed on the surface layer, or the like can be used. The positive electrode mixture layer 31 may include a positive electrode active material, a conductive agent, and a binder. The thickness of the positive electrode mixture layer 31 is greater than or equal to 10 μm and less than or equal to 150 μm, for example, on one side of the positive electrode current collector 30. The positive electrode 11 can be produced, for example, by coating a positive electrode slurry including a positive electrode active material, a conductive agent, and a binder on the surface of the positive electrode current collector 30, drying the coating, and rolling the dried coating to form the positive electrode mixture layer 31 on both the surfaces of the positive electrode current collector 30.

Examples of the conductive agent included in the positive electrode mixture layer 31 include carbon materials such as acetylene black (AB), carbon black (CB) including Ketjenblack, carbon nanotubes (CNT), and graphene, and graphite. These materials may be used singly or in combination with greater than or equal to 2 kinds thereof. The content ratio of the conductive agent in the positive electrode mixture layer 31 is, for example, greater than or equal to 0.1 mass% and less than or equal to 10 mass% relative to the total mass of the positive electrode mixture layer 31.

Examples of the binder included in the positive electrode mixture layer 31 include fluorine-based resins such as polytetrafluoroethylene (PTFE) and polyvinylidene fluoride (PVDF), polyacrylonitrile (PAN), polyimide-based resins, acrylic-based resins, and polyolefin-based resins. These materials may be used singly or in combination with greater than

or equal to 2 kinds thereof. The content ratio of the binder in the positive electrode mixture layer 31 is, for example, greater than or equal to 0.1 mass% and less than or equal to 10 mass% relative to the total mass of the positive electrode mixture layer 31.

The positive electrode active material included in the positive electrode mixture layer 31 includes a lithium-containing composite oxide and a sulfonate compound present on the surface of the lithium-containing composite oxide. The lithium-containing composite oxide is composed of single particles. The positive electrode active material may include, in addition to single particles, secondary particles each formed by aggregation of single particles. As a result, the charge density of the positive electrode active material in the positive electrode mixture layer increases, enabling the secondary battery 10 to achieve higher capacity. The secondary particles each formed by aggregation of single particles are, for example, formed by aggregation of greater than or equal to 2 and less than or equal to 1000 single particles. In addition, general primary particles other than single particles and secondary particles formed by aggregation of such primary particles may also be included. Note that the positive electrode active material may contain, in addition to the lithium-containing composite oxide, compounds such as LiF and $Li_2S$.

The proportion of single particles in the positive electrode active material is preferably greater than or equal to 10%, more preferably greater than or equal to 80%, particularly preferably greater than or equal to 90%, and may be substantially 100%. Note that the lithium-containing composite oxide may include secondary particles formed by aggregation of greater than 100 primary particles.

The average particle diameter of the single particles may be greater than or equal to 0.5 $\mu$m and less than or equal to 5 $\mu$m, and is preferably greater than or equal to 0.7 $\mu$m and less than or equal to 4 $\mu$m. In the present specification, the average particle diameter refers to the volume-based median diameter (D50). The D50 means the particle diameter at which the cumulative frequency in the volume-based particle size distribution reaches 50% from the smaller particle diameter side, which is also referred to as the median diameter. The particle size distribution of the positive electrode active material can be measured using a laser diffraction particle size distribution measuring device (e.g., MT3000II, manufactured by MicrotracBEL Corp.), with water used as the dispersion medium. When the particle diameter of the single particles is too large, battery capacity may decrease, and charge-discharge efficiency may deteriorate. When the particle diameter of the single particles is too small, secondary aggregation may occur, which becomes a cause of battery degradation.

The BET specific surface area of the single particles may be, for example, greater than or equal to 0.5 $m^2/g$ and less than or equal to 4 $m^2/g$, and is preferably greater than or equal to 1.0 $m^2/g$ and less than or equal to 3.5 $m^2/g$. When the BET specific surface area of the single particles is less than 0.5 $m^2/g$, the contact area between the single particles and the non-aqueous electrolyte decreases, leading to a decrease in capacity. When the BET specific surface area of the single particles is more than 4 $m^2/g$, the charge-discharge cycle performance may deteriorate. Since the secondary particles have voids in the particles, the specific surface area is relatively large even if the particle diameter is large. On the other hand, since the single particles have no voids in the particles, the larger the particle diameter, the smaller the BET specific surface area. The secondary particles and the single particles have various particle shapes depending on the respective production conditions, and thus the BET specific surface area varies. The BET specific surface area can be measured by using, for example, TriStar II3020 (manufactured by Shimadzu Corporation) under the following conditions.

Number of measurement points: 11 points (P/P0: 0.05 to 0.3)
Warm Free Space: Measured
Equilibration Interval: 5 s
Analysis Adsorptive: N2
Analysis Bath Temp.: 77.3 K (liquid nitrogen temperature)
Cold Free Space: Measured
Low Pressure Done: None
Analysis method: BET multipoint method

When the BET specific surface area of the lithium-containing composite oxide is defined as A ($m^2/g$), and the average particle diameter of the lithium-containing composite oxide is defined as B ($\mu$m), the product AB of A and B preferably satisfies $1.5 \leq AB \leq 6$, and more preferably $2 \leq AB \leq 5.5$. Thus, the battery capacity and durability of the secondary battery 10 are significantly improved. Secondary particles each formed by the aggregation of single particles having a small particle diameter may exhibit reduced charge-discharge cycle characteristics due to grain boundary fracture. Single particles having a large particle diameter may result in decreased battery capacity. Furthermore, when the BET specific surface area of the single particles is small, the contact area with the non-aqueous electrolyte may become small, leading to a reduction in battery capacity and deterioration in load characteristics. When the BET specific surface area of the single particles is large, many side reactions such as gas generation may occur at the positive electrode, leading to a deterioration in charge-discharge cycle characteristics. Therefore, when the product of the average particle diameter (D50) and the BET specific surface area is within the above range, it is possible to obtain a secondary battery 10

that exhibits high capacity, high durability, and suppressed gas generation.

The single particles preferably have a crystallite size of greater than or equal to 300 Å and less than or equal to 800 Å. When the single particles have the above-described average particle diameter and crystallite size, the single particles enable the secondary battery 10 to achieve high capacity and improved durability. As used herein, the crystallite size is calculated using the Scherrer equation as described below, based on the half-width of the diffraction peak of the (104) plane in the X-ray diffraction pattern obtained by X-ray diffraction. In the following equation, s represents the crystallite size, $\lambda$ represents the wavelength of the X-rays, B represents the half-width of the diffraction peak of the (104) plane, $\theta$ represents the diffraction angle (rad), and K is the Scherrer constant. In the present embodiment, K is 0.9.

$$s = K\lambda / B\cos\theta$$

The X-ray diffraction pattern is obtained by powder X-ray diffraction under the following conditions using a powder X-ray diffractometer (model name: RINT-TTR, manufactured by Rigaku Corporation, with a Cu-K$\alpha$ radiation source).

Measurement range: greater than or equal to 15° and less than or equal to 120°
Scan speed: 4°/min
Analysis range: greater than or equal to 30° and less than or equal to 120°
Background: B-spline
Profile function: Split-type pseudo-Voigt function
Constraint conditions: Li(3a) + Ni(3a) = 1

$$Ni(3a) + Ni(3b) = \alpha$$

($\alpha$ represents the proportion of Ni contained in each ICSD No.: 98-009-4814

The lithium-containing composite oxide contains greater than or equal to 70 mol% in total of Ni and Mn relative to the total molar amount of metal elements excluding Li. As a result, a relatively inexpensive and high-capacity lithium-containing composite oxide can be obtained. Note that the lithium-containing composite oxide may consist only of Ni and Mn. The content of metal elements contained in the lithium-containing composite oxide is measured, for example, by inductively coupled plasma (ICP) emission spectroscopic analysis.

Ni is suitably contained in the largest amount among the metal elements other than Li constituting the lithium-containing composite oxide. The Ni content in the lithium-containing composite oxide is preferably greater than or equal to 50 mol%, and more preferably greater than or equal to 70 mol%, relative to the total molar amount of the metal elements excluding Li. The upper limit of the Ni content may be 95 mol%, and is preferably 90 mol%.

Mn can stabilize the crystal structure of the lithium-containing composite oxide. The content of Mn in the lithium-containing composite oxide is, for example, greater than or equal to 5 mol% and less than or equal to 50 mol%, relative to the total molar amount of metal elements excluding Li.

The lithium-containing composite oxide may be a composite oxide represented by the general formula $Li_aNi_xMn_yM1_zM2_wO_{2-b}$, wherein $0.8 \leq a \leq 1.2$, $0.5 \leq x \leq 0.9$, $0.05 \leq y \leq 0.5$, $0 \leq z \leq 0.2$, $0 \leq w \leq 0.1$, $0 \leq b < 0.05$, $x + y \geq 0.7$, $x + y + z + w = 1$, M1 represents at least one element selected from the group consisting of Al and Co, and M2 represents at least one element selected from the group consisting of Fe, Ti, Si, Nb, Zr, Mo, and Zn.

The use of single particles enables a high capacity retention rate to be maintained even at elevated charge potentials. In particular, a lithium-containing composite oxide having a Ni content of less than or equal to 80% and a high Mn content is preferably composed of single particles having high potential resistance because a high capacity can be obtained by increasing the charge potential.

The sulfonate compound present on the surface of the lithium-containing composite oxide is represented by the following general formula I:

[Formula 2]

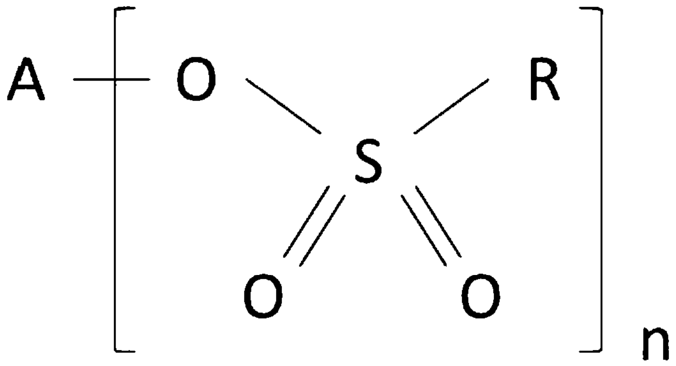

(I)

wherein A represents a group I element or a group II element, R represents a hydrocarbon group, and n represents 1 or 2.

In the general formula I, A preferably represents a group I element and more preferably Li. Thus, the direct current resistance can be further reduced. Note that when A represents a group I element, n = 1.

In the general formula I, R preferably represents an alkyl group. R more preferably represents an alkyl group having less than or equal to 5 carbon atoms, even more preferably an alkyl group having less than or equal to 3 carbon atoms, and particularly preferably a methyl group. In addition, some of the carbon-bonded hydrogens in R may be replaced with fluorine, but not all of the carbon-bonded hydrogens in R are replaced with fluorine. The smaller the molecular weight of R, the smaller the direct current resistance can be.

Examples of the sulfonate compound include lithium methanesulfonate, lithium ethanesulfonate, lithium propanesulfonate, sodium methanesulfonate, magnesium methanesulfonate, and lithium fluoromethanesulfonate.

The amount of the sulfonate compound present on the surface of the lithium-containing composite oxide is preferably greater than or equal to 0.1 mass% and less than or equal to 2 mass%, and more preferably greater than or equal to 0.25 mass% and less than or equal to 1.0 mass% relative to the mass of the lithium-containing composite oxide.

The presence of the sulfonate compound on the surfaces of the lithium-containing composite oxide can be confirmed by Fourier transform infrared spectroscopy (FT-IR), for example. In an infrared absorption spectrum obtained by FT-IR, the positive electrode active material may have an absorption peak at at least one or more positions near 1238 $cm^{-1}$, 1175 $cm^{-1}$, 1065 $cm^{-1}$, or 785 $cm^{-1}$.

In the infrared absorption spectrum obtained by FT-IR, for example, positive electrode active materials including lithium methanesulfonate have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are absorption peaks caused by SO stretching vibration derived from lithium methanesulfonate. The peak near 785 $cm^{-1}$ is an absorption peak caused by CS stretching vibration derived from lithium methanesulfonate.

In the positive electrode active materials including a sulfonate compound other than lithium methanesulfonate, similarly to the positive electrode active materials including lithium methanesulfonate, an absorption peak derived from the sulfonate compound included in the positive electrode active materials can be identified, and the presence of the sulfonate compound on the surfaces of the lithium-containing composite oxide can be confirmed by ICP, atomic absorption spectrometry, X-ray photoelectron spectroscopy (XPS), radiation XRD measurement, TOF-SIMS, or the like.

The average particle diameter of the sulfonate compound is preferably less than or equal to 10 μm, more preferably less than or equal to 5 μm, and still more preferably less than or equal to 3 μm. When the average particle diameter of the sulfonate compound is preferably less than or equal to 10 μm, more preferably less than or equal to 5 μm, and still more preferably less than or equal to 3 μm, the sulfonate compound can be more uniformly adhered to the entire positive electrode active material powder, and the effect of the sulfonate compound can be more remarkably exhibited. Here, the average particle diameter of the sulfonate compound can be determined by observing the sulfonate compound adhered to the surface of the lithium-containing composite oxide with a SEM. Specifically, the outer shape of 50 randomly selected particles is specified, the long diameter (longest diameter) of each of the 50 particles is obtained to define the average of these as the average particle diameter of the sulfonate compound.

By allowing a sulfonate compound to be present on the surface of the lithium-containing composite oxide, a coating film including the sulfonate compound facilitates $Li^+$ insertion and extraction, thereby exerting an effect of reducing the initial DCR. In particular, a material having excellent durability and initial DCR of single particles can be obtained by coating the surface of single particles of a lithium-containing composite oxide, which has a small BET specific surface area and tends to have a high initial DCR, with the sulfonate compound.

A metal compound may be present on the surfaces of the lithium-containing composite oxide. The metal

compound includes, for example, one or more metal elements selected from the group consisting of Sr, Ca, W, Zr, rare earths, and Al. Examples of the Sr-containing compound include SrO, $Sr(OH)_2$, and $SrCO_3$. Examples of the compound containing Ca include CaO, $Ca(OH)_2$, and $CaCO_3$. Examples of the compound containing W include $WO_3$. Examples of the compound containing Al include $Al_2O_3$. Examples of the Zr-containing compound include $ZrO_2$, $Zr(OH)_4$, $Zr(CO_3)_2$, and $Zr(SO_4)_2 \cdot 4H_2O$. Examples of the compound containing rare-earth include oxides, hydroxides, carbonates, sulfates, nitrates, and phosphates of rare earths. The metal compound may contain a plurality of these metal elements, and examples thereof include $SrAlO_4$, and $CaAlO_4$. The metal compound may further contain Li, and examples thereof include lithium tungstate.

A non-metal compound may be present on the surfaces of the lithium-containing composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

The amount of alkali in the positive electrode active material, as measured by the Warder method, may be less than or equal to 150 μmol/g, and is preferably less than or equal to 100 μmol/g. That is, the positive electrode active material may include a slight amount of a water-soluble alkali component to be titrated with an acid. When the amount of the alkali component included in the positive electrode active material is small, the stability of the slurry is improved, leading to enhanced productivity.

The positive electrode active material includes alkali components in an amount corresponding to the above-described acid consumption amount. Examples of the alkali component include lithium hydroxide (LiOH) and lithium carbonate ($Li_2CO_3$). Lithium carbonate and lithium hydroxide may be present inside the particles of the composite oxide at the interface of the primary particles and on the surface of the secondary particles formed by aggregation of the primary particles. Preferably, these components are present substantially uniformly, rather than being unevenly distributed on a part of the surface of the primary particles. When the components are present substantially uniformly on the surface of the primary particles, uneven reactions during charge and discharge are less likely to occur, thereby suppressing deterioration in durability.

The method for quantifying the amount of alkali using the Warder method is as follows.

(1) The positive electrode active material is added in an amount of 1 g to 30 mL of pure water and stirred to prepare a suspension obtained by dispersing the active material in water.
(2) The suspension is filtered, and pure water is added to the filtrate to make up the volume to 70 mL, thereby obtaining a filtrate including water-soluble alkali components eluted from the active material.
(3) While measuring the pH of the filtrate, hydrochloric acid is added dropwise little by little to determine the amount of hydrochloric acid consumed up to the first inflection point of the pH curve (around pH 8), denoted as X mol/g, and the amount consumed up to the second inflection point (around pH 4), denoted as Y mol/g. Note that the inflection points correspond to the peak positions of the differential value with respect to the titration volume.
(4) The alkali amount is a value of X - (Y - X), which is obtained from X and Y measured above.

The positive electrode mixture layer 31 may include, in addition to the positive electrode active material of the present embodiment, other positive electrode active materials. Examples of such other positive electrode active materials include lithium-containing composite oxides having Ni and Mn content of greater than or equal to 0 mol% and less than 70 mol%.

Next, an example of a method for producing the positive electrode active material according to the present embodiment will be described. The method for producing the positive electrode active material includes, for example, a synthesis step, a washing step, a drying step, and an addition step.

In the synthesis step, a metal hydroxide containing greater than or equal to 70 mol% in total of Ni and Mn is mixed with a Li compound and fired to obtain a lithium-containing composite oxide composed of single particles.

The metal hydroxide can be obtained, for example, by adding an alkaline solution such as sodium hydroxide dropwise while stirring a solution of a metal salt including Ni, Mn, and an arbitrary metal element (Al, Co, etc.), and adjusting the pH to the alkaline side (e.g., greater than or equal to 8.5 and less than or equal to 12.5), thereby precipitating (coprecipitating) a composite hydroxide including Ni, Mn, and an arbitrary metal element. Note that a metal oxide obtained by heat-treating the metal hydroxide may be used instead of the metal hydroxide. The particle diameter of the metal hydroxide is preferably less than or equal to 7 μm since smaller particles tend to promote the growth of primary particles.

Examples of the Li compounds include $Li_2O_3$, LiOH, $Li_2O_2$, $Li_2O$, $LiNO_3$, $LiNO_2$, $Li_2SO_4$, $LiOH \cdot H_2O$, LiH, and LiF. The mixing ratio of the metal hydroxide and the Li compound is preferably such that the molar ratio of metal elements excluding Li:Li is in the range of greater than or equal to 1:0.8 and less than or equal to 1:1.2, for example, from the viewpoint of facilitating the adjustment of the parameters within the above defined ranges. When the metal oxide and the Li compound are mixed, other metal raw materials may be added, if needed. Here, the other metal raw materials are oxides and the like including metal elements other than the metal elements constituting the metal oxide.

A mixture of the metal hydroxide and the Li compound, etc. is fired, for example, under an oxygen atmosphere (flowing a gas having an oxygen concentration of greater than or equal to 80%). The firing conditions may be a temperature rising rate at greater than or equal to 450°C and less than or equal to 680°C in the range of greater than 1.0°C/min and less than or equal to 5.5°C/min and a maximum attainable temperature in the range of greater than or equal to 850°C and less than or equal to 1100°C. The temperature rising rate from greater than 680°C to the maximum attainable temperature may be, for example, greater than or equal to 0.1°C/min and less than or equal to 3.5°C/min. The holding time at the maximum attained temperature may be greater than or equal to 1 hour and less than or equal to 30 hours, and is preferably greater than or equal to 1 hour and less than or equal to 25 hours. The firing step may be a multi-step firing, and a plurality of first temperature rising rates and a plurality of second temperature rising rates may be set for each temperature region as long as the first temperature rising rate and the second temperature rising rate are within the above-defined ranges. The particle diameter of the single particles can be adjusted by adjusting the firing conditions. For example, increasing the maximum attained temperature enables an increase in the particle diameter of single particles.

In the washing step, the lithium-containing composite oxide obtained in the synthesis step was washed with water and dehydrated to obtain a cake-like composition. The washing with water and the dehydration can be performed by known methods and conditions. The washing with water and the dehydration may be performed within a range in which lithium is not eluted from the lithium-containing composite oxide and battery characteristics are not deteriorated. Since the positive electrode active material according to the present embodiment is washed with water, resulting in a small amount of remaining alkaline components.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours. A heating treatment may be performed after the drying step. The heating temperature is, for example, greater than or equal to 100°C and less than or equal to 450°C. The heating treatment may be performed after the disintegration step described later.

The powder-like composition obtained in the drying step can be disintegrated to obtain single particles. A jet mill or the like can be used for disintegration. For example, disintegration using a jet mill can be carried out under the following conditions with a PJM-80 (manufactured by Nippon Pneumatic Mfg. Co., Ltd.).

Compressed air consumption: 0.5 $Nm^3$/min
Supply gas pressure: 0.53 MPa
Processing capacity: 2000 g/h

In the addition step, at least one of a sulfonate compound and a sulfonic acid solution is added to the cake-like composition obtained in the washing step or the powder-like composition obtained in the drying step. Accordingly, the sulfonate compound can be adhered to the surface of the lithium-containing transition metal composite oxide. At least one of a sulfonate compound and a sulfonic acid solution is preferably added to the cake-like composition. The sulfonate compound may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing transition metal composite oxide. The concentrations of the sulfonic acid solution and the sulfonate compound solution are each, for example, greater than or equal to 0.5 mass% and less than or equal to 40 mass%. The addition step may be performed during or after the washing step, or during or after the drying step, and the timing of implementation may be appropriately changed.

A metal compound including one or more metal elements selected from the group consisting of Sr, Ca, W, Zr, rare earth elements, and Al, and a non-metal compound including one or more non-metal elements selected from the group consisting of P and B, may be adhered to the surface of the lithium-containing composite oxide by adding raw materials of the metal compound and the non-metal compound at any stage selected from during or after the synthesis step, during or after the washing step, during or after the drying step, or during the addition step. Examples of Sr raw materials include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$. Examples of Ca raw materials include

$Ca(OH)_2$, CaO, $CaCO_3$, $CaSO_4$, $Ca(NO_3)_2$, $CaCl_2$, and $CaAlO_4$. Examples of Zr raw materials include $Zr(OH)_4$, $ZrO_2$, $Zr(CO_3)_2$, and $Zr(SO_4)_2 \cdot 4H_2O$. Examples of rare earth raw materials include rare earth oxides, hydroxides, and carbonates. Examples of W raw materials include tungsten oxide ($WO_3$) and lithium tungstates ($Li_2WO_4$, $Li_4WO_5$, $Li_6W_2O_9$). A solution containing W may also be used as a W raw material. Examples of Al raw materials include $Al_2O_3$, $Al(OH)_3$, and $Al_2(SO_4)_3$, although Al derived from the lithium-containing composite oxide may also be used. Examples of P raw materials include $Li_{3-x}H_xPO_4$ ($0 \leq x \leq 3$). Examples of B raw materials include $H_3BO_3$, $Li_3BO_3$, and $Li_2B_4O_7$. These compounds may be pulverized to appropriately change the particle diameter or may also be used by adjusting the water content, including hydrates.

[Negative Electrode]

The negative electrode 12 may have, for example, a negative electrode current collector 40 and a negative electrode mixture layer 41 formed on the surface of the negative electrode current collector 40, or a metal Li foil may be used as the negative electrode 12. The negative electrode 12 may also have a negative electrode current collector 40, and lithium metal may be deposited on the surface of the negative electrode current collector 40 by charging. When the negative electrode 12 has the negative electrode mixture layer 41, the negative electrode mixture layer 41 is preferably formed on both the surfaces of the negative electrode current collector 40. As the negative electrode current collector 40, a metal foil that is stable in the potential range of the negative electrode 12, such as copper or a copper alloy, or a film with the metal disposed on a surface layer may be used. The thickness of the negative electrode current collector 40 is, for example, greater than or equal to 5 $\mu$m and less than or equal to 30 $\mu$m. The negative electrode mixture layer 41 includes, for example, a negative electrode active material and a binder. The thickness of the negative electrode mixture layer 41 is greater than or equal to 10 $\mu$m and less than or equal to 150 $\mu$m, for example, on one side of the negative electrode core. The negative electrode 12 can be produced, for example, by coating a negative electrode mixture slurry including a negative electrode active material and a binder on the surface of the negative electrode current collector 40, drying the coating, and rolling the dried coating to form the negative electrode mixture layer 41 on both the surfaces of the negative electrode current collector 40.

As the negative electrode active material included in the negative electrode mixture layer 41, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer 41 include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, for example, a porous sheet having ion permeability and insulation properties may be used. Specific examples of the porous sheet include microporous films, woven fabrics, and nonwoven fabrics. Suitable materials for the separator include polyolefins such as polyethylene and polypropylene, and cellulose. The separator 13 may have a single-layer structure or a multilayer structure. Further, a heat-resistant resin layer such as an aramid resin layer, or a filler layer including an inorganic compound filler may be provided on the surface of the separator 13.

[Non-Aqueous Electrolyte]

The non-aqueous electrolyte has lithium ion conductivity. The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters

such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples and Comparative Examples, but the present disclosure is not limited to Examples.

<Example 1-1>

[Production of Positive Electrode Active Material]

LiOH and $Ni_{0.8}Mn_{0.2}(OH)_2$ powder having an average particle diameter of 6 μm obtained by the coprecipitation method were mixed so that the molar ratio of Li to the total amount of Ni and Mn was 1.1:1 to obtain a mixture. The mixture was fired from room temperature to 650°C for 5 hours under an oxygen stream at an oxygen concentration of greater than or equal to 90% (flow rate of greater than or equal to 0.15 L/min and less than or equal to 0.2 L/min relative to 1 L of furnace volume), then fired at 900°C for 2 hours, and held for 9 hours to obtain a lithium-containing transition metal composite oxide(synthesis step). Water was added to the lithium-containing composite oxide so that the slurry concentration was 1500 g/L, and the mixture was stirred for 15 minutes and filtered to obtain a cake-like composition (washing step). Powdered lithium methanesulfonate was added to the cake-like composition (addition step). The amount of lithium methanesulfonate added was 0.25 mass% relative to the total mass of the lithium-containing composite oxide. After the addition step, a drying step was performed under a vacuum atmosphere at 180° C for 2 hours to obtain secondary particles formed of aggregated single particles. Furthermore, the secondary particles were disintegrated with a jet mill to obtain a positive electrode active material of Example 1 composed of single particles. It was confirmed by Fourier transform infrared spectroscopy (FT-IR) that lithium methanesulfonate was present on the surface of the positive electrode active material. The amount of alkali measured by the Warder method was 80 μmol/g.

[Production of Positive Electrode]

The positive electrode active material, acetylene black, and polyvinylidene fluoride were mixed at a mass ratio of 92:5:3, and N-methyl-2-pyrrolidone (NMP) was used as a dispersion medium to prepare a positive electrode mixture slurry. Next, a positive electrode current collector made of aluminum foil was coated with the positive electrode mixture slurry, the coating was dried and compressed, and then the positive electrode current collector was cut into a predetermined electrode size to obtain a positive electrode in which a positive electrode mixture layer was disposed on both the surfaces of the positive electrode current collector. Note that an exposed portion, in which the surface of the positive electrode current collector was exposed, was provided in a part of the positive electrode.

[Preparation of Non-Aqueous Electrolyte]

Ethylene carbonate (EC), methyl ethyl carbonate (MEC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A wound electrode assembly was produced by attaching a positive electrode lead to the exposed portion of the positive electrode and a negative electrode lead to lithium metal foil as a negative electrode and spirally winding the positive electrode and the negative electrode with a polyolefin separator interposed therebetween. This electrode assembly was housed in an outer case composed of an aluminum laminate sheet, the non-aqueous electrolyte was injected thereinto, and an opening portion of the outer case was then sealed to obtain a test cell.

[Evaluation of Initial DCR]

The test cell was charged to a cell voltage of 4.5 V (vsLi) at a constant current of 0.2C under a temperature environment of 25°C and then charged at a constant voltage of 4.5 V (vsLi) until a current value reached 0.02 C. After 1 hour, the test cell was discharged to a cell voltage of 2.5 V (vsLi) at a constant current of 0.2C, which was defined as the initial cycle. Subsequently, the test cell was charged again at a constant voltage of 4.5 V (vsLi) until the capacity reaches 50% of the initial discharge capacity at a constant current of 0.2 C under a temperature environment of 25°C. The SOC of the secondary battery at that time was 50%. Thereafter, the secondary battery was allowed to stand in an open circuit for 1 hour, followed by constant current discharge at a constant current of 0.5 C for 10 seconds. The direct current resistance (DCR) was calculated from the open-circuit voltage (OCV), the closed-circuit voltage (CCV) at 10 seconds after discharge, and the current value at 10 seconds after discharge ($I_{10s}$), according to the following equation, to define this value as the initial DCR.

$$\text{Initial DCR} = (\text{OCV} - \text{CCV})/I_{10s}$$

[Evaluation of Capacity Retention Rate]

The test cell was charged until the battery voltage was equivalent to 4.5 V (vsLi) at a constant current of 0.2 C under a temperature environment of 25°C and then charged at a constant voltage of 4.5 V (vsLi) until the current value was equivalent to 0.02 C. Thereafter, the test cell was discharged until the battery voltage was equivalent to 2.5 V (vsLi) at a constant current of 0.2 C. This charge-discharge operation was defined as one cycle, which was repeated for 30 cycles. The capacity retention rate in the charge-discharge cycle of the test cell was determined using the following equation.

Capacity retention rate = (discharge capacity at 30th cycle/discharge capacity at 1st cycle) $\times$ 100

<Example 1-2>

A test cell was produced and evaluated in the same manner as in Example 1-1, except that in the addition step of producing the positive electrode active material, the amount of lithium methanesulfonate added relative to the total mass of the lithium-containing composite oxide was adjusted to 0.5 mass%. The amount of alkali measured using the Warder method was 82 μmol/g.

<Example 1-3>

A test cell was produced and evaluated in the same manner as in Example 1-1, except that in the addition step of producing the positive electrode active material, the amount of lithium methanesulfonate added relative to the total mass of the lithium-containing composite oxide was adjusted to 1.0 mass%. The amount of alkali measured using the Warder method was 85 μmol/g.

<Example 1-4>

A test cell was produced and evaluated in the same manner as in Example 1-1, except that in the addition step of producing the positive electrode active material, the amount of lithium methanesulfonate added relative to the total mass of the lithium-containing composite oxide was adjusted to 2.0 mass%. The amount of alkali measured by the Warder method was 90 μmol/g.

<Example 1-5>

A test cell was produced and evaluated in the same manner as in Example 1-3, except that the maximum attained temperature was changed to 850°C in the synthesis step of producing the positive electrode active material. The amount of alkali measured by the Warder method was 95 μmol/g.

<Example 1-6>

A test cell was produced and evaluated in the same manner as in Example 1-3, except that the maximum attained temperature was changed to 950°C in the synthesis step of producing the positive electrode active material. The amount of alkali measured by the Warder method was 75 μmol/g.

<Example 1-7>

A test cell was produced and evaluated in the same manner as in Example 1-3, except that lithium ethanesulfonate was added instead of lithium methanesulfonate in the addition step of producing the positive electrode active material. It was confirmed by Fourier transform infrared spectroscopy (FT-IR) that lithium ethanesulfonate was present on the surface of the positive electrode active material. The amount of alkali measured by the Warder method was 80 μmol/g.

<Example 1-8>

A test cell was produced and evaluated in the same manner as in Example 1-3, except that sodium methanesulfonate was added instead of lithium methanesulfonate in the addition step of producing the positive electrode active material. It was confirmed by Fourier transform infrared spectroscopy (FT-IR) that sodium methanesulfonate was present on the surface of the positive electrode active material. The amount of alkali measured by the Warder method was 82 μmol/g.

<Example 1-9>

A test cell was produced and evaluated in the same manner as in Example 1-1, except that in the addition step of producing the positive electrode active material, a lithium methanesulfonate solution obtained by dissolving lithium methanesulfonate in pure water was added instead of powdered lithium methanesulfonate, and the amount of lithium methanesulfonate added relative to the total mass of the lithium-containing composite oxide was adjusted to 1.0 mass%. Note that the concentration of the lithium methanesulfonate solution added was 10 mass%, and the lithium methanesulfonate solution was added so that the amount of lithium methanesulfonate added would correspond to the above. It was confirmed by Fourier transform infrared spectroscopy (FT-IR) that lithium methanesulfonate was present on the surface of the positive electrode active material. The amount of alkali measured by the Warder method was 81 μmol/g.

<Example 1-10>

A test cell was produced and evaluated in the same manner as in Example 1-1, except that in the addition step of producing the positive electrode active material, a solution of methanesulfonic acid was added instead of powdered lithium methanesulfonate, and the amount of methanesulfonic acid added relative to the total mass of the lithium-containing composite oxide was adjusted to 1.0 mass%. Note that the concentration of the methanesulfonate solution added was 10 mass%, and the methanesulfonate solution was added so that the amount of methanesulfonic acid would be as described above. It was confirmed by Fourier transform infrared spectroscopy (FT-IR) that lithium methanesulfonate was present on the surface of the positive electrode active material. The amount of alkali measured by the Warder method was 74 μmol/g.

<Example 1-11>

A test cell was produced and evaluated in the same manner as in Example 1-1, except that in the addition step of producing the positive electrode active material, a solution including methanesulfonic acid and LiOH (hereinafter, referred to as a methanesulfonic acid + LiOH solution), in which methanesulfonic acid and LiOH were dissolved in pure water at a molar ratio of 1:0.5, was added instead of powdered lithium methanesulfonate, and the amount of lithium methanesulfonate added relative to the total mass of the lithium-containing composite oxide was adjusted to 1.0 mass%. Note that the concentration of the methanesulfonic acid + LiOH solution added was 10 mass%, and the methanesulfonic acid + LiOH solution was added so that the amount of lithium methanesulfonate added would correspond to the above. It was confirmed by Fourier transform infrared spectroscopy (FT-IR) that lithium methanesulfonate was present on the surface of the positive electrode active material. The amount of alkali measured by the Warder method was 77 μmol/g.

<Example 1-12>

A test cell was produced and evaluated in the same manner as in Example 1-1, except that in the addition step of producing the positive electrode active material, a methanesulfonic acid + LiOH solution was added instead of powdered lithium methanesulfonate so that the molar ratio of methanesulfonic acid to LiOH was 1:1, and the amount of lithium methanesulfonate added relative to the total mass of the lithium-containing composite oxide was adjusted to 1.0 mass%. Note that the concentration of the methanesulfonic acid + LiOH solution added was 10 mass%, and the methanesulfonic acid + LiOH solution was added so that the amount of lithium methanesulfonate added would correspond to the above. It was confirmed by Fourier transform infrared spectroscopy (FT-IR) that lithium methanesulfonate was present on the surface of the positive electrode active material. The amount of alkali measured by the Warder method was 79 μmol/g.

<Comparative Example 1-1>

A test cell was produced and evaluated in the same manner as in Example 1-1, except that the addition step was omitted in the production of the positive electrode active material.

<Comparative Example 1-2>

A test cell was produced and evaluated in the same manner as in Example 1-1, except that in the addition step of producing the positive electrode active material, a 10 mass% lithium succinate solution was added instead of the methanesulfonate solution, and the amount of lithium succinate added relative to the total mass of the lithium-containing composite oxide was adjusted to 1.0 mass%.

<Comparative Example 1-3>

A test cell was produced and evaluated in the same manner as in Example 1-1, except that in the addition step of producing the positive electrode active material, a 10 mass% lithium oxalate solution was added instead of the methanesulfonate solution, and the amount of lithium oxalate added relative to the total mass of the lithium-containing composite oxide was adjusted to 1.0 mass%.

<Comparative Example 1-4>

A test cell was produced and evaluated in the same manner as in Example 1-3, except that the maximum attained temperature was changed to 1000°C in the synthesis step of producing the positive electrode active material. The amount of alkali measured by the Warder method was 82 μmol/g.

<Comparative Example 1-5>

A test cell was produced and evaluated in the same manner as in Examples 1-3 except that, in the synthesis steps of producing the positive electrode active material, the maximum attained temperature was changed to 750°C, and the holding time at the maximum attained temperature was changed to 3 hours, and disintegration of the secondary particles using a jet mill was not performed after the drying step. The positive electrode active material in Comparative Example 1-5 exhibited a secondary particle morphology. The amount of alkali measured by the Warder method was 65 μmol/g.

<Example 2-1>

A test cell was produced and evaluated in the same manner as in Example 1-3, except that in the synthesis step of producing the positive electrode active material, the composition of the metal hydroxide was changed to $Ni_{0.5}Mn_{0.5}(OH)_2$, the maximum attained temperature was changed to 1050°C, and the holding time at the maximum attained temperature was changed to 10 hours. The amount of alkali measured by the Warder method was 38 μmol/g.

<Example 2-2>

A test cell was produced and evaluated in the same manner as in Example 2-1, except that the maximum attained temperature was changed to 1000°C in the synthesis step of producing the positive electrode active material. The amount of alkali measured by the Warder method was 45 μmol/g.

<Comparative Example 2>

A test cell was produced and evaluated in the same manner as in Example 2-1, except that the addition step was omitted in the production of the positive electrode active material.

Tables 1 to 2 separately show the initial DCR and capacity retention rate of the test cells in Examples and Comparative Examples. The initial DCR and capacity retention rate of the test cells in Examples 1-1 to 1-12 and Comparative Example 1-1 to 1-5 shown in Table 1 were each expressed relatively, taking the initial DCR and capacity retention rate of the test cell in Comparative Example 1-1 as 100. Furthermore, the initial DCR and capacity retention rate of the test cells in Examples 2-1 and 2-2 and Comparative Example 2 shown in Table 2 were each expressed relatively, taking the initial DCR and capacity retention rate of the test cell in Comparative Example 2 as 100.

[Table 1]

| | Lithium-containing composite oxide | | | | | | | | Additive | | | Evaluation result | |
|---|---|---|---|---|---|---|---|---|---|---|---|---|---|
| | Composition | | Particle | Maximum attained temperature [°C] | D50 [μm] | BET specific surface area [$m^2$/g] | D50 × BET specific surface area | Crystallite size [Å] | Compound | Addition method | Addition amount [mass%] | Initial DCR | Capacity retention rate |
| | Ni [mol%] | Mn [mol%] | | | | | | | | | | | |
| Example 1-1 | 80 | 20 | Single particle | 900 | 2 | 1.1 | 2.2 | 600 | Li methanesulfonate | Powder | 0.25 | 97 | 104 |
| Example 1-2 | 80 | 20 | Single particle | 900 | 2 | 1.1 | 2.2 | 600 | Li methanesulfonate | Powder | 0.5 | 93 | 104 |
| Example 1-3 | 80 | 20 | Single particle | 900 | 2 | 1.1 | 2.2 | 600 | Li methanesulfonate | Powder | 1.0 | 90 | 105 |
| Example 1-4 | 80 | 20 | Single particle | 900 | 2 | 1.1 | 2.2 | 600 | Li methanesulfonate | Powder | 2.0 | 94 | 103 |
| Example 1-5 | 80 | 20 | Single particle | 850 | 0.7 | 3.2 | 2.2 | 500 | Li methanesulfonate | Powder | 1.0 | 87 | 109 |
| Example 1-6 | 80 | 20 | Single particle | 950 | 4 | 1.3 | 5.2 | 630 | Li methanesulfonate | Powder | 1.0 | 98 | 102 |
| Example 1-7 | 80 | 20 | Single particle | 900 | 2 | 1.1 | 2.2 | 600 | Li methanesulfonate | Powder | 1.0 | 96 | 103 |
| Example 1-8 | 80 | 20 | Single particle | 900 | 2 | 1.1 | 2.2 | 600 | Na methanesulfonate | Powder | 1.0 | 97 | 101 |
| Example 1-9 | 80 | 20 | Single particle | 900 | 2 | 1.1 | 2.2 | 600 | Li methanesulfonate | Solution | 1.0 | 89 | 105 |
| Example 1-10 | 80 | 20 | Single particle | 900 | 2 | 1.1 | 2.2 | 600 | Methanesulfonic acid | Solution | 1.0 | 96 | 102 |
| Example 1-11 | 80 | 20 | Single particle | 900 | 2 | 1.1 | 2.2 | 600 | Methanesulfonic acid + LiOH (Li/methanesulfonic acid = 0.5 [molar ratio]) | Solution | 1.0 | 93 | 103 |

(continued)

| | Lithium-containing composite oxide | | | | | | | | Additive | | | Evaluation result | |
|---|---|---|---|---|---|---|---|---|---|---|---|---|---|
| | Composition | | Particle | Maximum attained temperature [°C] | D50 [μm] | BET specific surface area [$m^2/g$] | D50 × BET specific surface area | Crystallite size [Å] | Compound | Addition method | Addition amount [mass%] | Initial DCR | Capacity retention rate |
| | Ni [mol%] | Mn [mol%] | | | | | | | | | | | |
| Example 1-12 | 80 | 20 | Single particle | 900 | 2 | 1.1 | 2.2 | 600 | Methanesulfonic acid + LiOH (Li/methanes ulfonic acid = 1.0 [m olar ratio]) | Solution | 1.0 | 89 | 105 |
| Comparative Example 1-1 | 80 | 20 | Single particle | 900 | 2 | 1.1 | 2.2 | 600 | - | - | - | 100 | 100 |
| Comparative Example 1-2 | 80 | 20 | Single particle | 900 | 2 | 1.1 | 2.2 | 600 | Li succinate | Solution | 1.0 | 102 | 101 |
| Comparative Example 1-3 | 80 | 20 | Single particle | 900 | 2 | 1.1 | 2.2 | 600 | Li oxalate | Solution | 1.0 | 103 | 101 |
| Comparative Example 1-4 | 80 | 20 | Single particle | 1000 | 6 | 1.2 | 7.2 | 400 | Li methanesulfonate | Powder | 1.0 | 110 | 105 |
| Comparative Example 1-5 | 80 | 20 | Multiple | 750 | 10 | 1.3 | 13 | 600 | Li methanesulfonate | Powder | 1.0 | 98 | 74 |

[Table 2]

| | Lithium-containing composite oxide | | | | | | | | Additive | | | Evaluation result | |
|---|---|---|---|---|---|---|---|---|---|---|---|---|---|
| | Composition | | Particle | Maximum attained temperature [°C] | D50 [μm] | BET specific surface area [$m^2/g$] | D50 × BET specific surface area | Crystallite size [Å] | Compound | Addition method | Addition amount [mass%] | Initial DCR | Capacity retention rate |
| | Ni [mol%] | Mn [mol%] | | | | | | | | | | | |
| Example 2-1 | 50 | 50 | Single particle | 1050 | 1.2 | 2.5 | 3.0 | 500 | Li methanesulfonate | Powder | 1.0 | 92 | 104 |
| Example 2-2 | 50 | 50 | Single particle | 1000 | 0.8 | 3 | 2.4 | 400 | Li methanesulfonate | Powder | 1.0 | 93 | 102 |
| Comparative Example 2-1 | 50 | 50 | Single particle | 1050 | 1.2 | 2.5 | 3.0 | 500 | - | - | - | 100 | 100 |

In Tables 1 and 2, the test cells in Examples exhibited a lower initial DCR and higher capacity retention rate than the test cells in Comparative Examples. By using a positive electrode active material obtained by allowing a sulfonate compound to be present on the surface of single particles having a prescribed composition, it is possible to provide a non-aqueous electrolyte secondary battery having high durability and suppressed direct current resistance.

The present disclosure will be further described with reference to embodiments below.

Constitution 1:

A positive electrode active material for a non-aqueous electrolyte secondary battery, including:

a lithium-containing composite oxide; and
a sulfonate compound present on a surface of the lithium-containing composite oxide, wherein
the lithium-containing composite oxide is composed of single particles having an average particle diameter of greater than or equal to 0.5 μm and less than or equal to 5 μm, and contains greater than or equal to 70 mol% in total of Ni and Mn relative to a total molar amount of metal elements excluding Li, and
the sulfonate compound is represented by the general formula I:

[Formula 3]

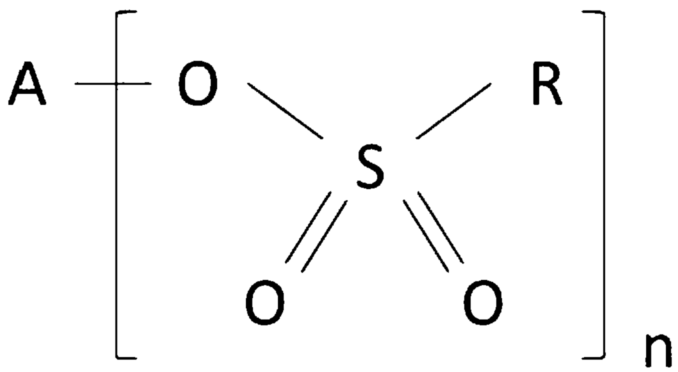

(I)

wherein A represents a group I element or a group II element, R represents a hydrocarbon group, and n represents 1 or 2.

Constitution 2:

The positive electrode active material for a non-aqueous electrolyte secondary battery according to Constitution 1, wherein the single particles have a crystallite size of greater than or equal to 300 Å and less than or equal to 800 Å.

Constitution 3:

The positive electrode active material for a non-aqueous electrolyte secondary battery according to Constitution 1 or 2, wherein, when a BET specific surface area of the lithium-containing composite oxide is defined as A ($m^2/g$), and an average particle diameter of the lithium-containing composite oxide is defined as B (μm), a product AB of A and B satisfies $1.5 \leq AB \leq 6$.

Constitution 4:

The positive electrode active material for a non-aqueous electrolyte secondary battery according to any one of Constitutions 1 to 3, wherein an amount of alkali measured by Warder method is less than or equal to 150 μmol/g.

Constitution 5:

The positive electrode active material for a non-aqueous electrolyte secondary battery according to any one of Constitutions 1 to 4, wherein A represents a group I element.

Constitution 6:

The positive electrode active material for a non-aqueous electrolyte secondary battery according to any one of Constitutions 1 to 4, wherein A represents Li.

Constitution 7:

The positive electrode active material for a non-aqueous electrolyte secondary battery according to any one of Constitutions 1 to 6, wherein R represents an alkyl group.

Constitution 8:

The positive electrode active material for a non-aqueous electrolyte secondary battery according to any one of Constitutions 1 to 6, wherein R represents a methyl group.

Constitution 9:

The positive electrode active material for a non-aqueous electrolyte secondary battery according to any one of Constitutions 1 to 8, wherein an amount of the sulfonate compound present on a surface of the lithium-containing composite oxide is greater than or equal to 0.1 mass% and less than or equal to 2 mass% relative to a mass of the lithium-containing composite oxide.

Constitution 10:

A method for producing a positive electrode active material for a non-aqueous electrolyte secondary battery, the method including:

a synthesis step of mixing a metal hydroxide containing greater than or equal to 70 mol% in total of Ni and Mn with a Li compound, followed by firing, to obtain a lithium-containing composite oxide composed of single particles;
a washing step of washing the lithium-containing composite oxide, followed by dehydration, to obtain a cake-like composition;
a drying step of drying the cake-like composition to obtain a powder-like composition; and
an addition step of adding at least one of the group consisting of a sulfonate compound and a sulfonic acid solution to the cake-like composition or the powder-like composition.

Constitution 11:

A non-aqueous electrolyte secondary battery comprising:

a positive electrode including the positive electrode active material for a non-aqueous electrolyte secondary battery according to any one of Constitutions 1 to 9;
a negative electrode; and
a non-aqueous electrolyte.

REFERENCE SIGNS LIST

10 Non-aqueous electrolyte secondary battery, 11 Positive electrode, 12 Negative electrode, 13 Separator, 14 Electrode assembly, 15 Battery case, 16 Exterior can, 17 Sealing assembly, 18, 19 Insulating plate, 20 Positive electrode tab, 21 Negative electrode tab, 22 Grooved portion, 23 Bottom plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer

## Claims

**1.** A positive electrode active material for a non-aqueous electrolyte secondary battery, including:

a lithium-containing composite oxide; and

a sulfonate compound present on a surface of the lithium-containing composite oxide, wherein the lithium-containing composite oxide is composed of single particles having an average particle diameter of greater than or equal to 0.5 μm and less than or equal to 5 μm, and contains greater than or equal to 70 mol% in total of Ni and Mn relative to a total molar amount of metal elements excluding Li, and the sulfonate compound is represented by the general formula I:

[Formula 1]

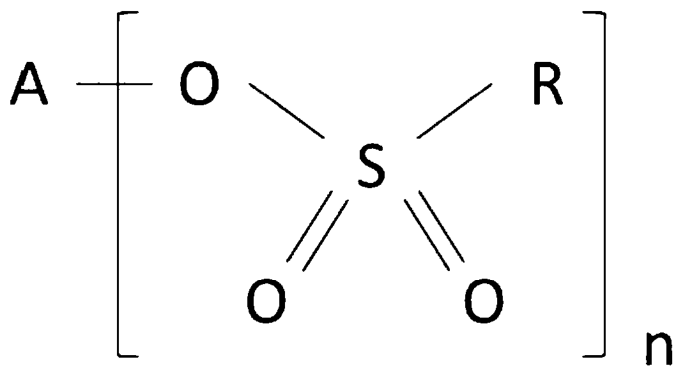

(I)

wherein A represents a group I element or a group II element, R represents a hydrocarbon group, and n represents 1 or 2.

2. The positive electrode active material for a non-aqueous electrolyte secondary battery according to claim 1, wherein the single particles have a crystallite size of greater than or equal to 300 Å and less than or equal to 800 Å.

3. The positive electrode active material for a non-aqueous electrolyte secondary battery according to claim 1, wherein,

when a BET specific surface area of the lithium-containing composite oxide is defined as A ($m^2/g$), and an average particle diameter of the lithium-containing composite oxide is defined as B (μm), a product AB of A and B satisfies $1.5 \leq AB \leq 6$.

4. The positive electrode active material for a non-aqueous electrolyte secondary battery according to claim 1, wherein an amount of alkali measured by Warder method is less than or equal to 150 μmol/g.

5. The positive electrode active material for a non-aqueous electrolyte secondary battery according to claim 1, wherein A represents a group I element.

6. The positive electrode active material for a non-aqueous electrolyte secondary battery according to claim 1, wherein A represents Li.

7. The positive electrode active material for a non-aqueous electrolyte secondary battery according to claim 1, wherein R represents an alkyl group.

8. The positive electrode active material for a non-aqueous electrolyte secondary battery according to claim 1, wherein R represents a methyl group.

9. The positive electrode active material for a non-aqueous electrolyte secondary battery according to claim 1, wherein an amount of the sulfonate compound present on a surface of the lithium-containing composite oxide is greater than or equal to 0.1 mass% and less than or equal to 2 mass% relative to a mass of the lithium-containing composite oxide.

10. A method for producing a positive electrode active material for a non-aqueous electrolyte secondary battery, the method including:

a synthesis step of mixing a metal hydroxide containing greater than or equal to 70 mol% in total of Ni and Mn with a Li compound, followed by firing, to obtain a lithium-containing composite oxide composed of single particles;

a washing step of washing the lithium-containing composite oxide, followed by dehydration, to obtain a cake-like composition;
a drying step of drying the cake-like composition to obtain a powder-like composition; and
an addition step of adding at least one of the group consisting of a sulfonate compound and a sulfonic acid solution to the cake-like composition or the powder-like composition.

**11.** A non-aqueous electrolyte secondary battery, comprising:

a positive electrode including the positive electrode active material for a non-aqueous electrolyte secondary battery according to any one of claims 1 to 9;
a negative electrode; and
a non-aqueous electrolyte.

Figure 1

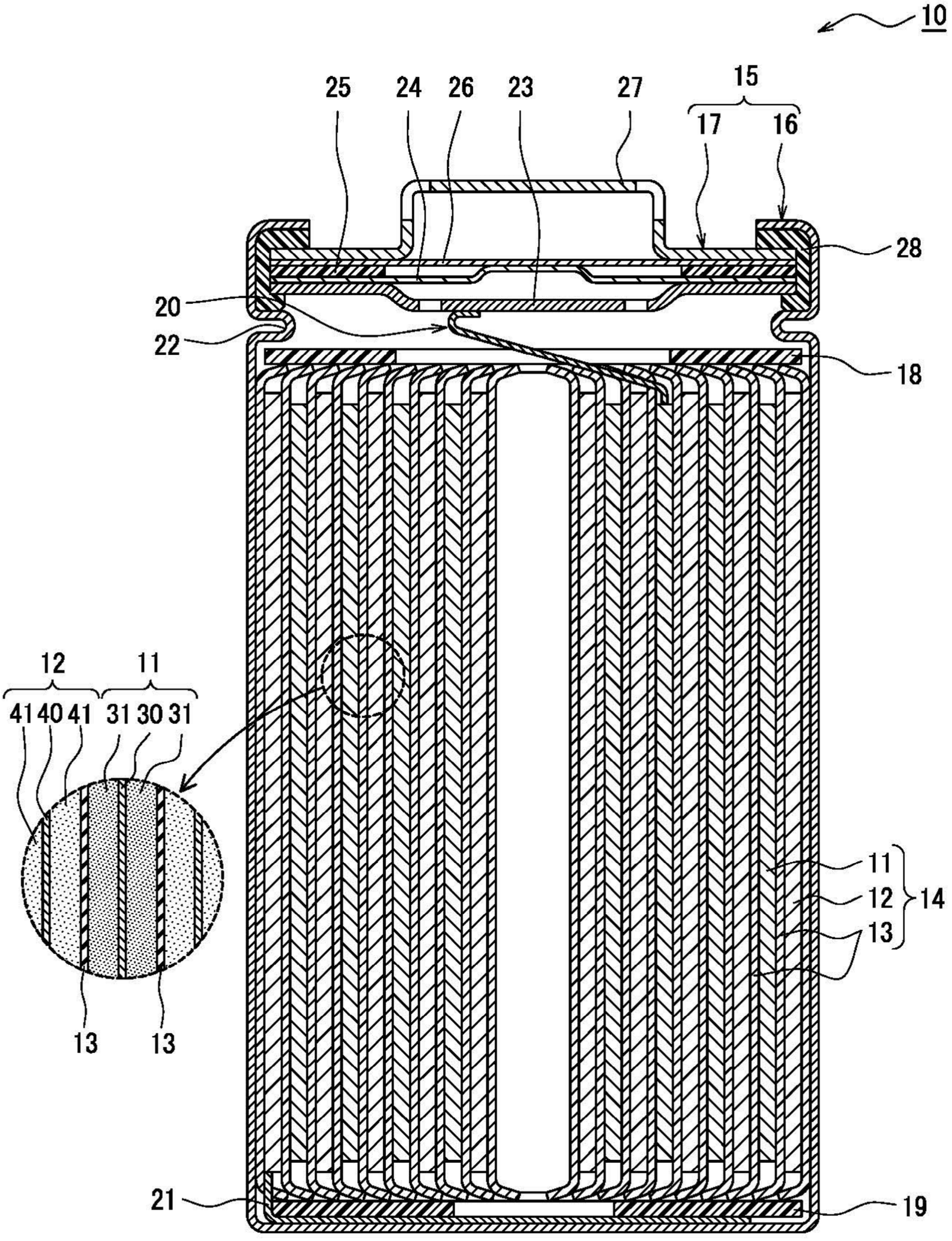
10
25
24
26
23
27
15
17
16
28
20
22
18
12
11
41 40 41
31 30 31
13
13
11
12
13
14
21
19

## INTERNATIONAL SEARCH REPORT

International application No. **PCT/JP2024/014463**

**A. CLASSIFICATION OF SUBJECT MATTER**

***H01M 4/525***(2010.01)i; ***H01M 4/36***(2006.01)i; ***H01M 4/505***(2010.01)i
FI: H01M4/525; H01M4/505; H01M4/36 A

According to International Patent Classification (IPC) or to both national classification and IPC

**B. FIELDS SEARCHED**

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-546936 A (SVOLT ENERGY TECH CO., LTD.) 10 November 2022 (2022-11-10) entire text | 1-11 |
| A | CN 109721109 A (BEIJING INSTITUTE OF TECHNOLOGY) 07 May 2019 (2019-05-07) entire text | 1-11 |
| A | JP 2021-105140 A (INDUSTRIAL TECHNOLOGY RESEARCH INSTITUTE) 26 July 2021 (2021-07-26) entire text | 1-11 |
| A | JP 2022-179341 A (FURUKAWA BATTERY CO., LTD.) 02 December 2022 (2022-12-02) entire text | 1-11 |
| A | JP 2009-110943 A (HITACHI MAXELL LTD.) 21 May 2009 (2009-05-21) entire text | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/014463**

| Patent document cited in search report | Publication date (day/month/year) | Patent family member(s) | Publication date (day/month/year) |
|---|---|---|---|
| JP 2022-546936 A | 10 November 2022 | US 2022/0340446 A1 | |
| | | WO 2021/143374 A1 | |
| | | EP 3998659 A1 | |
| | | CN 111435744 A | |
| | | KR 10-2021-0134658 A | |
| CN 109721109 A | 07 May 2019 | (Family: none) | |
| JP 2021-105140 A | 26 July 2021 | (Family: none) | |
| JP 2022-179341 A | 02 December 2022 | US 2024/0113338 A1 | |
| | | WO 2022/244808 A1 | |
| JP 2009-110943 A | 21 May 2009 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018532236 A
- JP 6850949 B